# EUROPÄISCHE PATENTANMELDUNG

(11) **EP 4 297 343 A1**
(43) Veröffentlichungstag der Anmeldung: **27.12.2023**
(21) Anmeldenummer: 22179908.3
(22) Anmeldetag: 20.06.2022
(51) Int. Cl.: H04L 12/28, G08B 21/04

(54) **HAUSAUTOMATIONSSYSTEM MIT EINER NOTRUF- UND/ODER HILFEFUNKTION SOWIE ENTSPRECHENDES VERFAHREN**

(71) Anmelder: GIRA GIERSIEPEN GmbH & Co. KG, 42477 Radevormwald (DE)
(72) Erfinder: Langensiepen, Mathias, 51515 Kürten (DE)
(74) Vertreter: Angerhausen, Christoph

(57) **Zusammenfassung**

Die Erfindung betrifft ein Hausautomationssystem mit einer Notruf- und/oder Hilfefunktion, mit einer Mehrzahl in einem Umfeld einer Wohneinheit installierter und dieser zugeordneter Hausautomationssensoren, welche zum Erfassen einer Bewohneraktivität ausgebildet sind; zumindest einem Kommunikationsmodul, welches zum Herstellen einer Kommunikationsverbindung mit einer außerhalb der Wohneinheit befindlichen und vordefinierbaren Hilfsinstanz ausgebildet ist; einer mit der Mehrzahl Sensoren und dem Kommunikationsmodul verbundenen Steuereinheit, welche zum Verarbeiten und Auswerten der Hausautomationssensordaten und zum Senden von Befehlen an das Kommunikationsmodul ausgebildet ist; wobei die Steuereinheit dazu eingerichtet ist, eine vordefinierbare oder maschinell erlernte Sensoraktivierungsabfrageroutine durchzuführen und bei Ausbleiben zumindest einer einer Bewohneraktivität zuordenbaren Sensoraktivierung automatisch einen Befehl an das Kommunikationsmodul zu senden, um dieses zum Herstellen einer Kommunikationsverbindung mit der Hilfsinstanz zu veranlassen. Die Erfindung betrifft ferner ein entsprechendes Verfahren.

## Beschreibung

Die Erfindung betrifft ein Hausautomationssystem mit einer Notruf- und/oder Hilfefunktion sowie ein entsprechendes Verfahren.

Bekannte Anwendungsbeispiele zu automatisierten Notrufsystemen sind bekannt aus unterschiedlichen technischen Gebieten. Beispielsweise können Wearables wie Smartwatches eine Sturzerkennungsfunktion aufweisen und dazu konfiguriert sein, automatisch Hilfe zu rufen und dabei den derzeitigen mittels GPS ermittelten Standort zu übersenden, wenn ein Sturz erkannt wird und der Träger der Uhr nicht reagiert. Ein weiteres Beispiel ist bekannt aus dem Automobilbereich. Das inzwischen gesetzlich vorgeschriebene eCall System Automotive ruft automatisch Hilfe und verschickt den Standort, wenn ein Unfall des Fahrzeugs erkannt wird und der Besitzer nicht reagiert.

Die DE 10 2010 033 985 B4 offenbart ein System zur unaufdringlichen Überwachung einer Person. Das System weist eine Datenverarbeitungsanlage auf, welche derart konfiguriert wird, dass diese mittels einer Mehrzahl Sensoren das Normalverhaltens einer zu überwachenden Person erlernt und von dem Normalverhalten abweichende Verhaltenszustände registriert. Das System weist eine Ablaufroutine auf, mittels welcher eine Rettungsstelle, die mit der Datenverarbeitungsanlage in Verbindung steht, benachrichtigt oder alarmiert werden kann.

Das offenbarte System weist jedoch den Nachteil auf, dass dieses aufwendig zu installieren und von einem Benutzer nicht konfigurierbar ist.

Es ist daher die Aufgabe der vorliegenden Erfindung, ein System bzw. ein Verfahren mit einer Notruf- und/oder Hilfefunktion derart zu verbessern, dass dieses einfacher und kostengünstiger zu installieren und von einem Benutzer konfigurierbar ist.

Die Aufgabe wird gelöst mit den Merkmalen der unabhängigen Ansprüche. Vorteilhafte Ausgestaltungen der Erfindung sind jeweils in den Unteransprüchen beschrieben.

Demgemäß ist vorgesehen, dass das Hausautomationssystem eine Mehrzahl in einem Umfeld einer Wohneinheit installierter und dieser zugeordneter Hausautomationssensoren aufweist, welche zum Erfassen einer Bewohneraktivität ausgebildet sind. Ferner weist das Hausautomationssystem zumindest ein Kommunikationsmodul auf, welches zum Herstellen einer Kommunikationsverbindung mit einer außerhalb der Wohneinheit befindlichen und vordefinierbaren Hilfsinstanz ausgebildet ist. Außerdem weist das Hausautomationssystem eine mit der Mehrzahl Sensoren und dem Kommunikationsmodul verbundene Steuereinheit auf, welche zum Verarbeiten und Auswerten der Hausautomationssensordaten und zum Senden von Befehlen an das Kommunikationsmodul ausgebildet ist. Die Steuereinheit ist dazu eingerichtet, eine vordefinierbare oder maschinell erlernte Sensoraktivierungsabfrageroutine durchzuführen und bei Ausbleiben zumindest einer einer Bewohneraktivität zuordenbaren Sensoraktivierung automatisch einen Befehl an das Kommunikationsmodul zu senden, um dieses zum Herstellen einer Kommunikationsverbindung mit der Hilfsinstanz zu veranlassen. Die Sensoren können über verdrahtete Schnittstellen wie beispielsweise KNX und/oder über Drahtlosschnittstellen mit der Steuereinheit verbunden sein. Ebenso kann das Kommunikationsmodul über KNX und/oder über eine Drahtlosschnittstelle mit der Steuereinheit verbunden sein. Ferner kann vorgesehen sein, dass die Steuereinheit in das Kommunikationsmodul integriert ist.

Die vorliegende Erfindung weist gegenüber dem aus dem Stand der Technik bekannten System den Vorteil auf, dass dieses problemlos in die Infrastruktur eines bereits vorhandenen Hausautomationssystems integriert werden kann und beispielsweise auf Informationen von ohnehin bereits vorhandenen Sensoren und die bereits vorhandene Steuereinheit zur Auswertung der Informationen zurückgreifen kann.

Es kann vorgesehen sein, dass die Mehrzahl Hausautomationssensoren eine erste Mehrzahl von gleichartigen Sensoren und eine zweite Mehrzahl von gleichartigen Sensoren aufweist, wobei die Sensortypen der ersten Mehrzahl und der zweiten Mehrzahl voneinander verschieden sind, wobei die Sensoraktivierungsabfrageroutine das konsekutive Abfragen von zumindest zwei Sensoren der ersten Mehrzahl von gleichartigen Sensoren umfasst und bei Ausbleiben einer einer Bewohneraktivität zuordenbaren Sensoraktivierung der ersten Mehrzahl von Sensoren das konsekutive Abfragen von zumindest zwei Sensoren der zweiten Mehrzahl von gleichartigen Sensoren umfasst. Beispielsweise kann zuerst in Bezug auf eine Mehrzahl Lichtschalter abgefragt werden, ob einer davon betätigt worden ist. Falls keiner der Lichtschalter betätigt wurde, kann eine andere Gruppe von Aktoren und/oder Sensoren auf eine wie auch immer geartete auf eine Bewohneraktivität deutende Information abgefragt werden, die auf Bewegungen und/oder sonstige Tätigkeiten des Bewohners schließen lässt. Ferner kann vorgesehen sein, dass zumindest zwei gleichartige oder zumindest zwei verschiedenartige Sensortypen eine einer Bewohneraktivität zuordenbare Sensoraktivierung an die Steuereinheit senden müssen, damit diese auf ein Normalverhalten des Bewohners schließt und dadurch ein Auslösen des Sendens des Befehls an das Kommunikationsmodul zur Herstellung einer Kommunikationsverbindung mit der Hilfsinstanz ausbleibt. Beispielsweise kann vorgesehen sein, dass zum einen eine positive Rückmeldung eines Bewegungsmelders sowie das Betätigen eines Lichtschalters registriert werden müssen, damit die Steuereinheit auf ein unkritisches Normalverhalten schließt.

Ferner kann vorgesehen sein, dass die Sensoraktivierungsabfrageroutine das Abfragen von zumindest zwei andersartigen Hausautomationssensoren in einer vordefinierten Reihenfolge umfasst. Beispielsweise kann vorgesehen sein, dass zunächst sukzessiv gleichartige eines ersten Sensortyps abgefragt werden, wie eine Mehrzahl in der Wohneinheit verteilter Bewegungsmelder, und anschließend sukzessiv gleichartige eines zweiten Sensortyps wie eine Mehrzahl den Schaltzustand von Lichtschaltern erfassende Sensoren abgefragt werden.

Es ist denkbar, dass das Ausbleiben einer vordefinierten oder maschinell erlernten Sensoraktivierungsabfrageroutine das Ausbleiben zumindest einer einer Bewohneraktivität zuordenbaren Sensoraktivierung innerhalb eines vordefinierbaren Zeitfensters umfasst. Beispielsweise kann vorgesehen sein, dass morgens bis zu einer vorgesehenen Uhrzeit, beispielsweise 10 Uhr, eine Sensorrückmeldung erfolgt sein muss, ohne welche die Steuereinheit auf ein Ausbleiben einer solchen schließt. Es kann zusätzlich vorgesehen sein, dass mehrere Zeitfenster vorgesehen sind, in welchen das System eine Bewohneraktivität abfragt. Dabei kann vorgesehen sein, dass innerhalb unterschiedlicher Zeitfenster unterschiedliche Sensoraktivierungsabfrageroutinen erfolgen. Beispielsweise können dabei Sensoren in bestimmten zu erwartenden Bewegungsrichtungen des Bewohners nach und nach abgefragt werden, morgens zum Beispiel ausgehend vom Bett in Richtung eines Bade- oder Wohnzimmers und abends in umgekehrter Reihenfolge.

Es kann vorgesehen sein, dass das Kommunikationsmodul fest in der Wohneinheit installiert ist, beispielsweise als eine fest verbaute Unterputz-Einheit. Dadurch fügt sich dieses dezent und unauffällig in die Wohnumgebung ein, ohne dass der Bewohner den Eindruck erhält, permanent überwacht zu werden. Das Kommunikationsmodul kann eine Bedieneinheit und eine Kommunikationseinheit aufweisen. Bei Vorhandensein eines mobilen Endgeräts kann das Kommunikationsmodul durch das mobile Endgerät verwirklicht sein, welches sowohl eine Bedieneinheit als auch eine Kommunikationseinheit aufweisen kann. Die Bedieneinheit kann ein Display zum Anzeigen von Informationen betreffend den Status des Kommunikationsmoduls aufweisen. Die Informationen können beispielsweise den Batteriestatus, die Signalstärke, Telefonnummern von aktiven, vergangenen und verpassten Anrufen oder einen Countdown aufweisen, welcher angibt, wie viele Minuten und/oder Sekunden bis zu einem anstehenden Notruf verbleiben.

Es kann vorgesehen sein, dass das Kommunikationsmodul einen Lautsprecher und ein Mikrofon aufweist. Der Lautsprecher und das Mikrofon können in der Kommunikationseinheit untergebracht sein. Ferner kann das Kommunikationsmodul eine GSM-Karte zur Herstellung der Kommunikationsverbindung über ein Mobilfunknetz aufweisen. Die GSM-Karte kann in der Bedieneinheit untergebracht sein. Dadurch kann das Hausautomationssystem ohne Verbindung zu einem Festnetzanschluss oder ohne ein separates Mobiltelefon unabhängig betrieben werden. Durch Verwendung des Mobilfunknetzes ist sowohl das Tätigen von Anrufen als auch das Versenden von SMS möglich. Alternativ kann vorgesehen sein, dass das Kommunikationsmodul für die Kommunikationsverbindung VoIP, WLAN oder einen Festnetzanschluss verwendet. Es kann vorgesehen sein, dass das Kommunikationsmodul eine Batterie aufweist und das Kommunikationsmodul dazu eingerichtet ist, bei einem Stromausfall die Hilfsinstanz mittels Übersendung einer SMS und/oder einer Sprachnachricht über den Stromausfall zu informieren. Alternativ oder ergänzend kann vorgesehen sein, dass das Kommunikationsmodul an die Spannungsversorgung der Wohneinheit angeschlossen ist.

Es kann ferner vorgesehen sein, dass das Kommunikationsmodul die Wohnungsstation einer Türkommunikationsanlage ist oder in diese integriert ist. Dadurch kann für die Notruf- und/oder Hilfefunktion nahezu vollständig auf bereits vorhandene Komponenten des Hausautomationssystems zurückgegriffen werden, so dass sich dieses besonders schnell und kostengünstig in einer bereits bestehenden Anlage implementieren lässt. Alternativ kann vorgesehen sein, dass ein über eine Drahtlosschnittstelle mit dem Hausautomationssystem verbundenes mobiles Endgerät, auf welchem eine entsprechende App installiert ist, in welcher die notwendige Funktionalität implementiert ist, als Kommunikationsmodul dient. Das mobile Endgerät kann darüber hinaus die Funktion der Steuereinheit ausführen bzw. als Server fungieren, bzw. kann die Steuereinheit und/oder der Server durch das mobile Endgerät verwirklicht sein.

Es kann vorgesehen sein, dass zumindest einer der Hausautomationssensoren zum Erfassen von Schalterbetätigungen ausgebildet ist. Beispielsweise können dabei sämtliche in der Wohneinheit verbauten Schalter überwacht werden. Ferner kann zumindest einer der Hausautomationssensoren als Bewegungsmelder ausgebildet sein. Ferner kann zumindest einer der Hausautomationssensoren zum Erfassen von Schließ- und/oder Offenstellungen von Fenstern und/oder Türen ausgebildet sein, beispielsweise als Kontaktsensor.

Mithilfe der genannten Sensoren kann das Kommunikationsmodul eine Kommunikationsverbindung aufbauen, wenn ein bestimmtes Ereignis oder eine bestimmte Routine in der überwachten Räumlichkeit, wie beispielsweise ein Haus oder eine Wohnung, ausbleibt. Beispielsweise kann dies umfassen, dass ein Lichtschalter im Bad bis zu einer gewissen Uhrzeit nicht betätigt wird. Ferner kann das Ausbleiben der einer Bewohneraktivität zuordenbaren Sensoraktivierung umfassen, dass ein oder mehrere Bewegungsmelder nicht auslösen. Ferner kann auf eine Notsituation geschlossen werden, wenn beispielsweise eine Tür nicht geöffnet wird oder in einem geöffneten Zustand verbleibt. Es kann vorgesehen sein, dass die Sensoraktivierungsabfrageroutine über eine vorinstallierte programmierte Logik festgelegt ist, welche in der Steuereinheit des Hausautomationssystems gespeichert ist. Ferner kann vorgesehen sein, dass die Sensoraktivierungsabfrageroutine durch den Bewohner frei konfigurierbar ist, so dass beispielsweise Zeitfenster bis zum Auslösen eines Notrufs oder bestimmte Sensorabfrageroutinen editierbar sind. Ferner kann vorgesehen sein, dass die Sensoraktivierungsabfrageroutine durch bestimmte wiederkehrende Verhaltensweisen des Bewohners angelernt wird und ein ungewöhnliches davon Abweichen von der Steuereinheit automatisch als Notsituation klassifiziert wird.

Es kann vorgesehen sein, dass das Herstellen der Kommunikationsverbindung das Herstellen einer auditiven Kommunikationsverbindung zwischen dem Bewohner und der Hilfsinstanz mittels des Kommunikationsmoduls umfasst. Ferner kann vorgesehen sein, dass das Herstellen der Kommunikationsverbindung das Übermitteln einer vorgefertigten Text- und/oder Sprachnachricht an die Hilfsinstanz mittels des Kommunikationsmoduls umfasst.

Ferner kann vorgesehen sein, dass die Steuereinheit dazu eingerichtet ist, bei Ausbleiben zumindest der einer Bewohneraktivität zuordenbaren Sensoraktivierung vor dem Herstellen der Kommunikationsverbindung das Kommunikationsmodul zur Ausgabe eines akustischen und/oder optischen Warnsignals zu veranlassen, auf die anstehende Kontaktierung der Hilfsinstanz aufmerksam zu machen. Dabei kann vorgesehen sein, dass das akustische und/oder optische Warnsignal über eine vordefinierbare Zeitdauer durch das Kommunikationsmodul ausgegeben ist. Dadurch besteht für den Bewohner die Möglichkeit, einer möglicherweise falschen Alarmierung der Hilfsinstanz vorzukommen und diese vorzeitig zu unterbinden. Dazu kann das Kommunikationsmodul eine Abbruchfunktion aufweisen, durch deren Auslösung der Bewohner nach Erhalt des akustischen und/oder optischen Warnsignals das Herstellen der Kommunikationsverbindung aktiv unterbinden kann. Die Abbruchfunktion kann beispielsweise durch eine Betätigungstaste am Kommunikationsmodul ausgeführt werden. Beispielsweise kann bei Ausbleiben einer Bewohnertätigkeit vor dem Herstellen der Kommunikationsverbindung mit der Hilfsinstanz ein gut vernehmbarer Warnton und/oder ein Blinklicht vom Kommunikationsmodul ausgegeben werden, um den Bewohner auf den anstehenden Ruf aufmerksam zu machen. Dieses Warnsignal kann beispielsweise für zwei Minuten ausgegeben werden, innerhalb welcher der Bewohner für den Fall, dass keine Notsituation vorliegt, die Möglichkeit hat, über die Betätigungstaste den Aufbau einer Kommunikationsverbindung zu der Hilfsinstanz zu unterbinden. Betätigt der Bewohner die Betätigungstaste nicht innerhalb des Zeitfensters, in welchem das Warnsignal ertönt und/oder erscheint, wird der Ruf schließlich ausgelöst.

Es kann ferner vorgesehen sein, dass das Hausautomationssystem ferner zumindest ein über eine drahtlose Kommunikationsschnittstelle mit dem Hausautomationssystem verbundenes mobiles Endgerät aufweist, welches dazu eingerichtet ist, die Sensoraktivierungsabfrageroutine zu konfigurieren. Das mobile Endgerät kann dabei das Kommunikationsmodul und/oder die Steuereinheit verwirklichen. Das mobile Endgerät kann ferner dazu eingerichtet sein, dass ein Nutzer des mobilen Endgeräts zu kontaktierende Telefonnummern von ein oder mehreren Hilfsinstanzen im Hausautomationssystem hinterlegen oder editieren kann. Dadurch kann ein Anruf an eine definierte Telefonnummer erfolgen. Ferner kann beispielsweise eine Abfolge von zu kontaktierenden Telefonnummern festgelegt werden, für den Fall, dass über eine priorisierte Nummer keine Hilfsperson erreicht werden kann. Es ist ferner denkbar, dass das Warnsignal, welches auf die anstehende Kontaktierung der Hilfsinstanz aufmerksam macht, zusätzlich auf dem des mobilen Endgerät ausgegeben wird. Dabei kann vorgesehen sein, dass der Bewohner den Abbruch des Rufaufbaus alternativ zur Betätigungstaste am Kommunikationsmodul auch am mobilen Endgerät initiieren kann. Dadurch kann der Bewohner auch in Fällen, in denen er abwesend ist und eine Abschaltung des Notrufsystems vergessen hat, auch aus der Ferne den Abbruch des Rufaufbaus einleiten. Ferner kann vorgesehen sein, dass der Bewohner das System mittels des mobilen Endgeräts aktivieren und deaktivieren kann.

Es kann ferner vorgesehen sein, dass das mobile Endgerät ferner dazu eingerichtet ist, dass ein Nutzer des mobilen Endgeräts ein oder mehrere Zeitfenster festlegen kann, innerhalb welcher ein oder mehrere der Mehrzahl Hausautomationssensoren eine einer Bewohneraktivität zuordenbaren Sensoraktivierung registriert haben müssen, bevor das Kommunikationsmodul durch die Steuereinheit zum Herstellen einer Kommunikationsverbindung veranlasst wird.

Das mobile Endgerät kann ferner dazu eingerichtet sein, dass ein Nutzer des mobilen Endgeräts Abwesenheitszeiten definieren kann, innerhalb welcher sich der Bewohner außerhalb der Wohneinheit befindet, und innerhalb welcher das Herstellen einer Kommunikationsverbindung mit der Hilfsinstanz unterbleibt.

Weiterhin kann das mobile Endgerät dazu eingerichtet sein, die Empfangsstärke eines in dem Kommunikationsmodul verbauten GSM-Moduls zu erfassen und auszugeben. Außerdem kann das mobile Endgerät dazu eingerichtet sein, einen Batteriestatus des Kommunikationsmoduls zu erfassen und auszugeben. Ferner kann vorgesehen sein, dass das mobile Endgerät dazu eingerichtet ist, einen Ereignisspeicher des Kommunikationsmoduls auszulesen und auszugeben, und ferner dazu eingerichtet ist, dass ein Nutzer des mobilen Endgeräts den Ereignisspeicher editieren kann. Es ist außerdem denkbar, dass das mobile Endgerät dazu eingerichtet ist, dass ein Nutzer des mobilen Endgeräts vorgefertigte SMS und/oder vorgefertigte Sprachnachrichten hinterlegen und/oder editieren kann. Das mobile Endgerät kann mittels Bluetooth mit dem Kommunikationsmodul verbunden werden.

Die Erfindung betrifft ferner ein Verfahren zum Betreiben eines Hausautomationssystem mit einer Notruf- und/oder Hilfefunktion, aufweisend die Schritte:
- Abfragen einer Mehrzahl von in einer Wohneinheit installierter und dieser zugeordneter Hausautomationssensoren mittels einer Steuereinheit des Hausautomationssystems gemäß einer Sensoraktivierungsabfrageroutine, ob zumindest einer der Mehrzahl Hausautomationssensoren in einem vorgegebenen Zeitfenster eine Bewohneraktivität erfasst hat;
- sofern eine Rückmeldung zumindest eines der Mehrzahl Hausautomationssensoren innerhalb des vorgegebenen Zeitfensters ausbleibt: Senden eines Befehls an ein fest in der Wohneinheit installiertes Kommunikationsmodul mittels der Steuereinheit, um das Kommunikationsmodul zum Herstellen einer Kommunikationsverbindung mit einer außerhalb der Wohneinheit befindlichen Hilfsinstanz zu veranlassen.

Das Verfahren kann ferner den Schritt aufweisen vor dem Senden des Befehls an das Kommunikationsmodul: Ausgeben eines optischen und/oder akustischen Warnsignals, um den Bewohner über ein anstehendes Herstellen einer Kommunikationsverbindung zu informieren.

Ferner kann vorgesehen sein, dass die Mehrzahl Hausautomationssensoren eine erste Mehrzahl von gleichartigen Sensoren und eine zweite Mehrzahl von gleichartigen Sensoren aufweist, wobei die Sensortypen der ersten Mehrzahl und der zweiten Mehrzahl voneinander verschieden sind, wobei die Sensoraktivierungsabfrageroutine die Schritte umfassen kann:
konsekutives Abfragen von zumindest zwei Sensoren der ersten Mehrzahl von gleichartigen Sensoren;
bei Ausbleiben einer einer Bewohneraktivität zuordenbaren Sensoraktivierung der ersten Mehrzahl von Sensoren: konsekutive Abfragen von zumindest zwei Sensoren der zweiten Mehrzahl von gleichartigen Sensoren.

Es kann vorgesehen sein, dass das Herstellen der Kommunikationsverbindung das Herstellen einer auditiven Kommunikationsverbindung zwischen dem Bewohner und der Hilfsinstanz mittels des Kommunikationsmoduls umfasst.

Ferner kann vorgesehen sein, dass das Herstellen der Kommunikationsverbindung das Übermitteln einer vorgefertigten Sprachnachricht an die Hilfsinstanz mittels des Kommunikationsmoduls umfasst. Ferner kann eine automatisierte Übermittlung des Standorts erfolgen, beispielsweise in Form einer durch den Nutzer gespeicherten Adresse oder durch Übermittlung des über GPS ermittelten Standorts der Kommunikationseinheit, beispielsweise, wenn diese als mobiles Endgerät ausgebildet ist.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Fig. 1: einen schematischen Aufbau des erfindungsgemäßen Hausautomationssystems; und
- Fig. 2: ein Ablaufdiagramm einer Ausführungsform des erfindungsgemäßen Hausautomationsverfahrens.

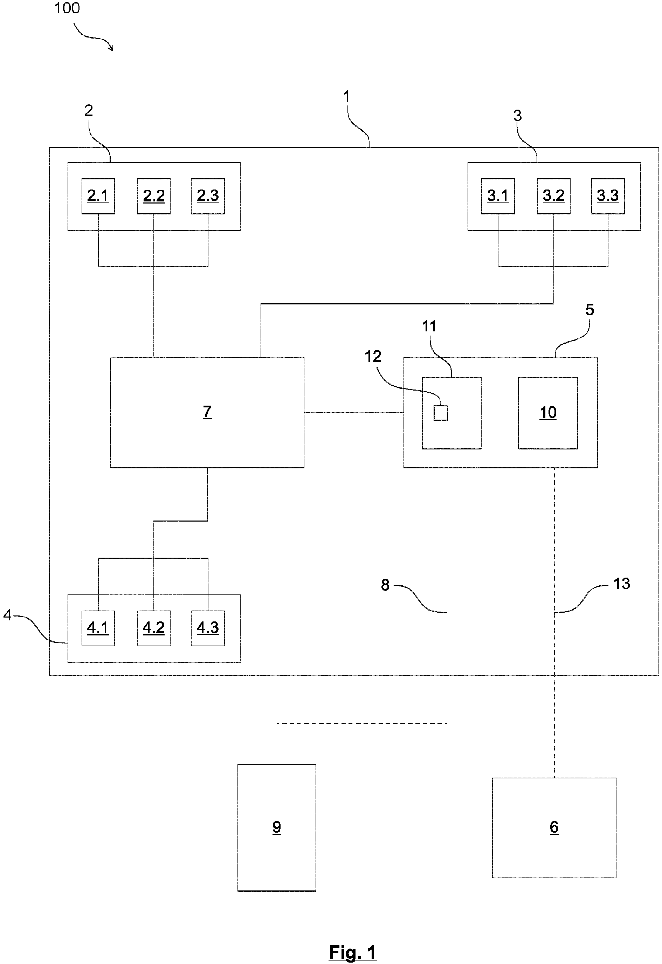

Fig. 1 veranschaulicht den Aufbau des erfindungsgemäßen Hausautomationssystems 100. Dieses ist innerhalb einer Wohneinheit 1 einer überwachungsbedürftigen Person installiert und weist eine Steuereinheit 7, ein Kommunikationsmodul 5 sowie eine Mehrzahl unterschiedlicher in der Wohneinheit 1 installierter Sensoren 2, 3, 4 auf. Die Sensoren umfassen Sensoren eines ersten Sensortyps 2, wie beispielsweise mehrere Lichtschalter 2.1, 2.2, 2.3, Sensoren eines zweiten Sensortyps 3, wie beispielsweise mehrere Bewegungsmelder 3.1, 3.2, 3.3 und Sensoren eines dritten Sensortyps 4, wie beispielsweise mehrere Kontaktsensoren 4.1, 4.2, 4.3. Die Sensoren sind jeweils über drahtgebundene oder drahtlose Schnittstellen mit der Steuereinheit 7 des Hausautomationssystems verbunden. Die Steuereinheit 7 ist wiederum beispielsweise über KNX mit dem Kommunikationsmodul 5 verbunden und dazu eingerichtet, bei Ausbleiben zumindest einer einer Bewohneraktivität zuordenbaren Sensoraktivierung einen Befehl an das Kommunikationsmodul 5 zu senden, um dieses zum Aufbau einer Kommunikationsverbindung 13 mit einer außerhalb der Wohneinheit 1 befindlichen Hilfsinstanz 6 zu veranlassen. Das Kommunikationsmodul 5 weist eine Bedieneinheit 11 sowie eine Kommunikationseinheit 10 auf. Die Kommunikationseinheit 10 weist ein Mikrofon und einen Lautsprecher auf, so dass die kontaktierte Hilfsinstanz mit der in der Wohneinheit 1 befindlichen Person kommunizieren kann. Über die Bedieneinheit 11 lässt sich das Kommunikationsmodul konfigurieren, ferner weist diese einen Abbruchschalter 12 auf. Dieser dient dazu, dem Bewohner eine Möglichkeit zu geben, einen anstehenden Ruf der Hilfsinstanz 6 zu unterbinden, wenn ein über die Kommunikationseinheit 10 ausgegebenes Warnsignal ihn zuvor auf den anstehenden Ruf aufmerksam gemacht hat. Das Hausautomationssystem 100 weist ferner ein mobiles Endgerät 9 auf, welches über eine Drahtlosschnittstelle 8 mit dem Kommunikationsmodul 5 verbunden ist. Mittels des mobilen Endgeräts 9 kann beispielsweise die Sensorabfrageroutine konfiguriert oder ebenfalls die oben beschriebene Abbruchfunktion betätigt werden.

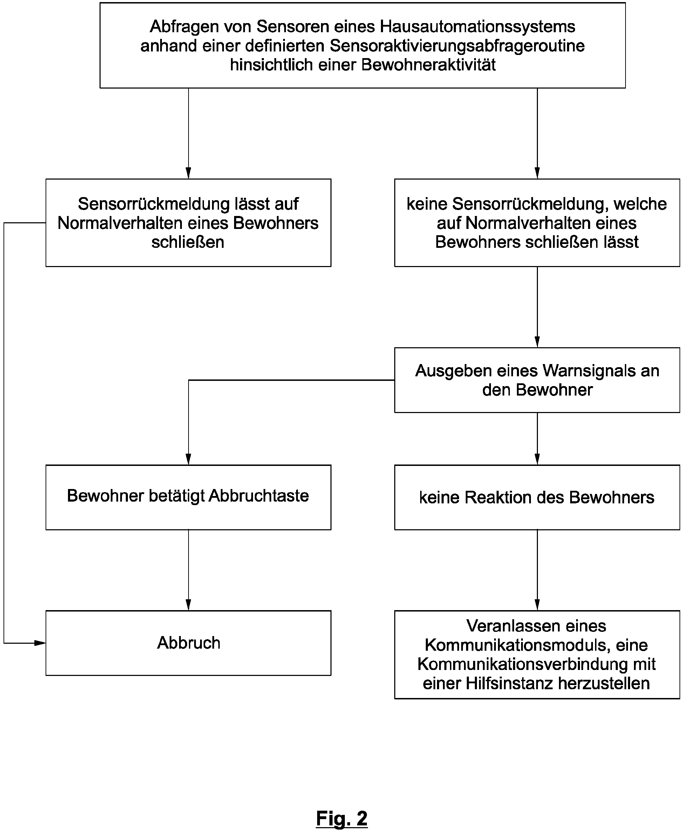

Fig. 2 zeigt ein Ablaufdiagramm des Hausautomationsverfahrens. Zunächst werden anhand einer definierten Sensoraktivierungsabfrageroutine die mehreren in der Wohneinheit 1 befindlichen Sensoren 2.1, 2.2, 2.3, 3.1, 3.2, 3.3, 4.1, 4.2, 4.3 unterschiedlichen Typs durch die Steuereinheit 7 abgefragt, ob durch diese innerhalb eines vordefinierten Zeitfensters eine Sensoraktivität vorliegt, welche auf eine Bewohneraktivität schließen lässt. Wenn eine solche vorliegt und auf ein Normalverhalten des Bewohners geschlossen werden kann, ist der Vorgang beendet bzw. wird die Sensoraktivierungsabfrageroutine abgebrochen. Liegt hingegen keine Sensorrückmeldung vor, welche auf ein Normalverhalten des Bewohners schließen lässt, wird anschließend zunächst mittels des Kommunikationsmoduls 5 ein Warnsignal an den Bewohner ausgegeben, welches ihn über den innerhalb einer vordefinierten Zeitspanne erfolgenden Anruf der Hilfsinstanz 6 vorwarnt. Betätigt der Bewohner daraufhin die Abbruchtaste 12 am Kommunikationsmodul oder über sein mobiles Endgerät 9, kommt es ebenfalls zum Abbruch der Sensoraktivierungsabfrageroutine und der Anruf der Hilfsinstanz 6 bleibt aus. Erfolgt hingegen keine Reaktion des Bewohners auf das Warnsignal innerhalb der vordefinierten Zeitspanne, sendet die Steuereinheit 7 einen Befehl an das Kommunikationsmodul 5, um dieses zum Herstellen einer Kommunikationsverbindung mit der Hilfsinstanz 6 zu veranlassen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Wohneinheit
- 2: Mehrzahl von Sensoren des ersten Sensortyps
- 3: Mehrzahl von Sensoren des zweiten Sensortyps
- 4: Mehrzahl von Sensoren des dritten Sensortyps
- 5: Kommunikationsmodul
- 6: Hilfsinstanz
- 7: Steuereinheit
- 8: Drahtlose Kommunikationsschnittelle
- 9: Mobiles Endgerät
- 10: Kommunikationseinheit
- 11: Bedieneinheit
- 12: Abbruchschalter
- 13: Mobilfunkverbindung
- 100: Hausautomationssystem

## Patentansprüche

1. Hausautomationssystem (100) mit einer Notruf- und/oder Hilfefunktion, mit einer Mehrzahl in einem Umfeld einer Wohneinheit (1) installierter und dieser zugeordneter Hausautomationssensoren (2, 3, 4), welche zum Erfassen einer Bewohneraktivität ausgebildet sind;
zumindest einem Kommunikationsmodul (5), welches zum Herstellen einer Kommunikationsverbindung mit einer außerhalb der Wohneinheit (1) befindlichen und vordefinierbaren Hilfsinstanz (6) ausgebildet ist;
einer mit der Mehrzahl Sensoren (2, 3, 4) und dem Kommunikationsmodul (5) verbundenen Steuereinheit (7), welche zum Verarbeiten und Auswerten der Hausautomationssensordaten und zum Senden von Befehlen an das Kommunikationsmodul (5) ausgebildet ist;
wobei die Steuereinheit (7) dazu eingerichtet ist, eine vordefinierbare oder maschinell erlernte Sensoraktivierungsabfrageroutine durchzuführen und bei Ausbleiben zumindest einer einer Bewohneraktivität zuordenbaren Sensoraktivierung automatisch einen Befehl an das Kommunikationsmodul (5) zu senden, um dieses zum Herstellen einer Kommunikationsverbindung mit der Hilfsinstanz (6) zu veranlassen.

2. Hausautomationssystem (100) nach Anspruch 1, wobei die Mehrzahl Hausautomationssensoren (2, 3, 4) eine erste Mehrzahl von gleichartigen Sensoren (2) und eine zweite Mehrzahl von gleichartigen Sensoren (3) aufweist, wobei die Sensortypen der ersten Mehrzahl (2) und der zweiten Mehrzahl (3) voneinander verschieden sind, wobei die Sensoraktivierungsabfrageroutine das konsekutive Abfragen von zumindest zwei Sensoren der ersten Mehrzahl von gleichartigen Sensoren (2) umfasst und bei Ausbleiben einer einer Bewohneraktivität zuordenbaren Sensoraktivierung der ersten Mehrzahl von Sensoren (2) das konsekutive Abfragen von zumindest zwei Sensoren der zweiten Mehrzahl von gleichartigen Sensoren (3) umfasst.

3. Hausautomationssystem (100) nach Anspruch 1 oder 2, wobei das Ausbleiben einer vordefinierten oder maschinell erlernten Sensoraktivierungsabfrageroutine das Ausbleiben zumindest einer einer Bewohneraktivität zuordenbaren Sensoraktivierung innerhalb eines vordefinierbaren Zeitfensters umfasst.

4. Hausautomationssystem (100) nach einem der vorangehenden Ansprüche, wobei das Kommunikationsmodul (5) eine fest verbaute Unterputz-Einheit ist.

5. Hausautomationssystem (100) nach einem der vorangehenden Ansprüche, wobei das Kommunikationsmodul (5) eine GSM-Karte zur Herstellung der Kommunikationsverbindung über ein Mobilfunknetz aufweist.

6. Hausautomationssystem (100) nach einem der vorangehenden Ansprüche, wobei das Kommunikationsmodul (5) eine Batterie aufweist, und wobei das Kommunikationsmodul (100) dazu eingerichtet ist, bei einem Stromausfall die Hilfsinstanz mittels Übersendung einer SMS und/oder einer Sprachnachricht über den Stromausfall zu informieren.

7. Hausautomationssystem (100) nach einem der vorangehenden Ansprüche, wobei das Kommunikationsmodul (5) die Wohnungsstation einer Türkommunikationsanlage ist.

8. Hausautomationssystem (100) nach einem der vorangehenden Ansprüche, wobei die Steuereinheit (7) dazu eingerichtet ist, bei Ausbleiben zumindest der einer Bewohneraktivität zuordenbaren Sensoraktivierung vor dem Herstellen der Kommunikationsverbindung das Kommunikationsmodul (5) zur Ausgabe eines akustischen und/oder optischen Warnsignals zu veranlassen, auf die anstehende Kontaktierung der Hilfsinstanz (6) aufmerksam zu machen.

9. Hausautomationssystem (100) nach einem der vorangehenden Ansprüche, welches ferner eine Abbruchfunktion aufweist, durch deren Auslösung der Bewohner nach Erhalt des akustischen und/oder optischen Warnsignals das Herstellen der Kommunikationsverbindung aktiv unterbinden kann.

10. Hausautomationssystem (100) nach einem der vorangehenden Ansprüche, welches ferner zumindest ein über eine drahtlose Kommunikationsschnittstelle (8) mit dem Hausautomationssystem (100) verbundenes mobiles Endgerät (9) aufweist, welches dazu eingerichtet ist, die Sensoraktivierungsabfrageroutine zu konfigurieren.

11. Verfahren zum Betreiben eines Hausautomationssystem (100) mit einer Notruf- und/oder Hilfefunktion, aufweisend die Schritte:
Abfragen einer Mehrzahl von in einer Wohneinheit (1) installierter und dieser zugeordneter Hausautomationssensoren (2, 3, 4) mittels einer Steuereinheit (7) des Hausautomationssystems (100) gemäß einer
Sensoraktivierungsabfrageroutine, ob zumindest einer der Mehrzahl Hausautomationssensoren (2, 3, 4) in einem vorgegebenen Zeitfenster eine Bewohneraktivität erfasst hat;
Sofern eine Rückmeldung zumindest eines der Mehrzahl Hausautomationssensoren (2, 3, 4) innerhalb des vorgegebenen Zeitfensters ausbleibt: Senden eines Befehls an ein Kommunikationsmodul (5) mittels der Steuereinheit (7), um das Kommunikationsmodul (5) zum Herstellen einer Kommunikationsverbindung mit einer außerhalb der Wohneinheit (1) befindlichen Hilfsinstanz (6) zu veranlassen.

12. Verfahren nach Anspruch 11, ferner aufweisend den Schritt: Vor dem Senden des Befehls an das Kommunikationsmodul (5): Ausgeben eines optischen und/oder akustischen Warnsignals, um den Bewohner über ein anstehendes Herstellen einer Kommunikationsverbindung zu informieren.

13. Verfahren nach Anspruch 11 oder 12, wobei die Mehrzahl Hausautomationssensoren (2, 3, 4) eine erste Mehrzahl von gleichartigen Sensoren (2) und eine zweite Mehrzahl von gleichartigen Sensoren (3) aufweist, wobei die Sensortypen der ersten Mehrzahl und der zweiten Mehrzahl voneinander verschieden sind, wobei die Sensoraktivierungsabfrageroutine die Schritte umfasst:
konsekutives Abfragen von zumindest zwei Sensoren der ersten Mehrzahl von gleichartigen Sensoren (2);
bei Ausbleiben einer einer Bewohneraktivität zuordenbaren Sensoraktivierung der ersten Mehrzahl von Sensoren (2): konsekutive Abfragen von zumindest zwei Sensoren der zweiten Mehrzahl von gleichartigen Sensoren (3).

14. Verfahren nach einem der Ansprüche 11 bis 13, wobei das Herstellen der Kommunikationsverbindung das Herstellen einer auditiven Kommunikationsverbindung zwischen dem Bewohner und der Hilfsinstanz (6) mittels des Kommunikationsmoduls (5) umfasst.

15. Verfahren nach einem der Ansprüche 11 bis 14, wobei das Herstellen der Kommunikationsverbindung das Übermitteln einer vorgefertigten Sprachnachricht an die Hilfsinstanz (6) mittels des Kommunikationsmoduls (5) umfasst.
